# EUROPÄISCHE PATENTSCHRIFT

(11) **EP 2 748 118 B1**
(45) Veröffentlichungstag und Bekanntmachung des Hinweises auf die Patenterteilung: **01.02.2017**
(21) Anmeldenummer: 12748452.5
(22) Anmeldetag: 17.08.2012
(51) Int. Cl.: C04B 22/10, C04B 28/04

(54) **HYDROPHILE BAUSTOFFERZEUGNISSE**
HYDROPHILIC BUILDING PRODUCTS
MATÉRIAUX DE CONSTRUCTION HYDROPHILES

(30) Priorität: 26.08.2011 EP 11179007
(43) Veröffentlichungstag der Anmeldung: 02.07.2014
(73) Patentinhaber: Construction Research & Technology GmbH, 83308 Trostberg (DE)
(72) Erfinder: ELLENRIEDER, Florian, 86152 Augsburg (DE); RIEDMILLER, Joachim, 86316 Friedberg (DE); MAIRHÖRMANN, Manfred, 86199 Augsburg (DE); MC ILHATTON, Michael, 91670 Angerville (FR)
(74) Vertreter: BASF IP Association
(86) Internationale Anmeldenummer: PCT/EP2012/066074
(87) Internationale Veröffentlichungsnummer: WO 2013/030011

(56) Entgegenhaltungen:
- EP-A1- 2 080 740
- DE-A1- 3 018 826
- US-A1- 2009 011 207

## Beschreibung

Gegenstand der vorliegenden Erfindung ist die Verwendung von ≥ 1 Gew.-% Kaliumcarbonat, bezogen auf die Trockenmasse eines zementbasierten Bindemittelsystems, zur Hydrophilierung der Oberfläche des daraus hergestellten, gehärteten Baustofferzeugnisses. Weiterhin wird ein zementbasiertes Baustofferzeugnis enthaltend Kaliumcarbonat und Mikrosilika aus der Zirkoniumgewinnung beansprucht.

Zement ist ein anorganischer, feingemahlener Stoff, der nach dem Anrühren mit Wasser infolge chemischer Reaktionen mit dem Anmachwasser selbständig erstarrt und erhärtet; er bleibt nach dem Erhärten auch unter Wasser fest und raumbeständig. Chemisch betrachtet ist Zement hauptsächlich kieselsaures Calcium mit Anteilen an Aluminium und Eisen, das als kompliziertes Stoffgemisch vorliegt. Im Allgemeinen enthält er auch Anteile an Sulfaten. Portlandzement ist hierbei einer der wichtigsten Vertreter dieser Bindemittelklasse. Er wurde erstmals im Britischen Patent BP 5022 erwähnt und wurde seither ständig weiterentwickelt. Moderner Portlandzement enthält ca. 70 Gew.-% CaO + MgO, ca. 20 Gew.-% SiO₂ und ca. 10 Gew.-% Al₂O₃ + Fe₂O₃. Durch seinen hohen CaO-Anteil härtet er hydraulisch. Ausgehärteter Portlandzement weist eine ausgeprägte Porosität auf, welche die Anschmutzung begünstigt, und ist schwer zu reinigen.

Allgemein ist die Reinigbarkeit von Baustofferzeugnissen, die aus zementbasierten Bindemittelsystemen hergestellt sind, von großer Wichtigkeit. Insbesondere organische Verschmutzungen führen auf den Oberflächen solcher Baustofferzeugnisse zu sichtbaren, schwer entfernbaren Flecken.

Um schmutzanfällige Oberflächen von ausgehärteten zementären Mörteln oder von Betonen gegen äußere Einflüsse zu schützen, können diese sowohl durch hydrophobe als auch durch hydrophile Beschichtungen, Grundierungen oder Versiegelungen vergütet werden.

Zur Entfernung von Farbverschmutzungen an Fassaden wurden zum Beispiel Antigraffitisysteme entwickelt, die durch Hydrophobierung der Oberfläche die Haftung von Graffitifarben mindern. Beschrieben sind diese Beschichtungen unter anderem in WO 92/21729, WO 97/24407 oder DE 19955047. Nachteilig bei diesen Systemen ist die oftmals schlechte Haftung am Substrat, die geringe Transparenz, der hohe Preis sowie eine unzureichende Härte. Auch ist ein zusätzlicher Arbeitschritt notwendig.

In US 2008/0250978 ist eine hydrophobe, selbstreinigende Beschichtung beschrieben, welche durch einbringen von hydrophobierten Nanopartikeln erreicht wird, z.B. durch Mikrosilika oder Zinkoxid. Die Wirksamkeit der Beschichtung kann allenfalls über mehrere Wochen nachgewiesen werden.

Hydrophile Beschichtungen zur Verbesserung der Hafteigenschaften von zementären Bindemitteln sind in DE 3018826 dargestellt. Durch Abmischungen von Polyvinylalkohol und Borsäure in wässriger Lösung wird eine Erhöhung der Hydrophilie erreicht.

Weitere hydrophile Beschichtungen und deren Beschichtungsmethoden finden sich in CN 101440168, EP 2080740 und US 4,052,347. Alle diese Beschichtungen haben gemein, dass organische Additive verwendet werden.

Auch die Verwendung von Titandioxid (z.B. Rutil oder Anatas) in Baustofferzeugnissen bzw. Beschichtungszusammensetzungen ist bekannt. Titandioxid wirkt bei UV-Bestrahlung und bei entsprechender Dotierung auch bei Bestrahlung mit sichtbarem Licht, photokatalytisch, d.h. es zersetzt organische Verschmutzungen oxidativ. Auch lässt sich die Hydrophilie der Oberflächen durch die Verwendung von Titandioxid steigern. Titandioxid kann prinzipiell in der Masse des Baustofferzeugnisses oder als Bestandteil einer Beschichtungszusammensetzung verwendet werden.

Beispielsweise beschreibt WO 08/079756 A1 eine Beschichtungszusammensetzung und einen beschichteten Gegenstand, wobei die Beschichtungszusammensetzung photokatalytische Teilchen (z.B. TiO₂) und ein Alkalisilikat-Bindemittel sowie weiterhin Borsäure, Borate und Mischungen davon, umfasst. EP 2080740 A1 beschreibt eine hydrophile Beschichtung umfassend Titandioxid und eine Ether/Oleat-basierte organische Verbindung.

Die Verwendung von Titandioxid und besonders der Einsatz in der Masse des Baustofferzeugnisses ist allerdings teuer. Zudem ist man bei der photokatalytischen Selbstreinigung auf das Vorhandensein von UV-Strahlung angewiesen. Die photokatalytische Selbstreinigung ist daher z.B. im Innen- bzw. Sanitärbereich ohne zusätzliche Maßnahmen nicht anwendbar.

Die US 2009/011207 beschreibt eine zementäre Zusammensetzung, welche 35 - 60 Gew.-% eines zementären reaktiven Pulvers, insbesondere Portlandzement, 2 - 10 Gew.-% eines expandierten und chemisch gecoateten Perlitfüllers, 20 - 40 Gew.-% Wasser und weiterhin 10 - 50 Vol-% eingeschlossene Luft umfasst. Weiterhin wird offenbart, dass die zementäre Zusammensetzung weniger als 2 % eines Erhärtungsbeschleunigers enthalten kann, wobei unter einer Vielzahl von Stoffen auch Kaliumcarbonat genannt wird. Weiterhin kann die zementäre Zusammensetzung ein weiteres mineralisches Additiv umfassen, wobei unter anderem auch Mikrosilika ("silica fume") offenbart wird.

Die der vorliegenden Erfindung zu Grunde liegende Aufgabe bestand darin, die Nachteile des Standes der Technik im Wesentlichen zu vermeiden. Insbesondere sollte eine preisgünstige Alternative zu den oben genannten Beschichtungen gefunden werden, die eine leichte Reinigbarkeit der Baustofferzeugnisse ermöglicht. Zudem sollte die Ablösbarkeit der wirksamen Bestandteile von der Oberfläche des Baustofferzeugnisses vermieden werden.

Die vorliegende Aufgabe wurde mit den Merkmalen des unabhängigen Anspruchs gelöst. Die abhängigen Ansprüche betreffen bevorzugte Ausführungsformen.

Es wurde überraschend gefunden, dass die Verwendung von ≥ 1 Gew.-% Kaliumcarbonat, bezogen auf die Trockenmasse eines zementbasierten Bindemittelsystems, zur Hydrophilierung der Oberfläche des daraus hergestellten, gehärteten Baustofferzeugnisses führt. Besonders vorteilhaft ist dabei, dass es sich nicht um einen reinen Oberflächeneffekt handelt, sondern das komplette Material diese Eigenschaften aufweist.

Die Berechnung der erfindungsgemäßen Bestandteile erfolgt in Gewichtsprozent (Gew.-%) auf der Basis des "wasserfreien Bindemittelsystems", d.h. Wasser wird erfindungsgemäß nicht als Bestandteil des Bindemittelsystems angesehen und gerechnet.

Das "Bindemittelsystem" umfasst erfindungsgemäß mindestens ein zementbasiertes Bindemittel. Besonders vorteilhaft handelt es sich hierbei um Calciumsilikat-Zement, insbesondere Portlandzement. Es kann aber auch eine Mischung aus Portlandzementen und Aluminatzementen enthalten. Portlandzement enthält wie bereits oben ausgeführt ca. 70 Gew.-% CaO + MgO, ca. 20 Gew.-% SiO₂ und ca. 10 Gew.-% Al₂O₃ + Fe₂O₃. Aluminatzement ("High Alumina Cement") enthält ca. 20 bis 40 Gew.-% CaO, bis zu etwa 5 Gew.-% SiO₂, ca. 40 bis 80 Gew.-% Al₂O₃ und bis zu etwa 20 Gew.-% Fe₂O₃. Diese Zementsorten sind im Stand der Technik wohlbekannt.

In einer besonders bevorzugten Ausführungsform liegt der Anteil an Zement bei ≥ 20 Gew.-%, vorzugsweise ≥ 35 Gew.-% und insbesondere ≥ 45 Gew.-%, bezogen auf die Trockenmasse des zementbasierten Bindemittelsystems. In einer speziellen Ausführungsform kann das Bindemittelsystem aus bis zu 99 Gew.-% aus dem zementbasierten Bindemittel bestehen, insbesondere aus Portlandzement.

Im erfindungsgemäßen Bindemittel können inerte Füllstoffe und/oder weitere Additive anwesend sein. Diese optionalen Komponenten können alternativ auch erst bei der Zubereitung eines Mörtels oder Betons zugegeben werden.

Vorzugsweise können zwischen 0 und 90 Gew.-%, besonders bevorzugt zwischen 30 und 70 Gew.-% inerte Füllstoffe und/oder zwischen 0 und 15 Gew.-%, insbesondere zwischen 1 und 10 Gew.-% Additive anwesend sein oder bei der Beton- bzw. Mörtelzubereitung zugegeben werden. Diese optionalen Füllstoffe und/oder Additive werden als Komponenten des Bindemittelsystems angesehen. Die entsprechenden Gewichtsangaben beziehen sich daher ebenfalls auf das Gesamtgewicht aller Komponenten des Bindemittelsystems.

Inerte Füllstoffe sind allgemein bekannt. Das zementbasierte Bindemittelsystem kann als Füllstoff insbesondere mindestens eine Verbindung aus der Reihe Quarzsand, Quarzmehl, Kalkstein, Schwerspat, Calcit, Dolomit, Talkum, Kaolin, Glimmer und Kreide enthalten. Weiterhin sind auch Leichtfüllstoffe geeignet. Bevorzugt enthält das zementbasierte Bindemittelsystem als Leichtfüllstoff mindestens eine Verbindung aus der Reihe Perlit, Mineralschaum, Schaumperlen, Bims, Blähglas, Hohlglaskugeln und Calciumsilikat-Hydrat.

Mikrosilika ist ein Nebenprodukt der Silicium- bzw. Ferrosiliciumherstellung oder Zirkoniumherstellung und besteht größtenteils aus amorphem SiO₂-Pulver. Die Teilchen haben Durchmesser in der Größenordnung von 0,1 µm. Die spezifische Oberfläche liegt in der Größenordnung von 15 bis 30 m²g⁻¹. Demgegenüber ist handelsüblicher Quarzsand kristallin und weist vergleichsweise große Teilchen und eine vergleichsweise kleine spezifische Oberfläche auf. Vorteilhaft enthält das zementbasierte Bindemittelsystem einen Anteil von 3 bis 60 Gew.-%, insbesondere 10 bis 30 Gew.-% Mikrosilika. In einer besonders bevorzugten Ausführungsform handelt es sich um Mikrosilika aus der Zirkoniumgewinnung. Durch den Einsatz von Mikrosilika aus der Zirkoniumgewinnung kann die Hydrophilie der gehärteten Baustoffoberfläche weiter verbessert werden.

Zur Anpassung des zementbasierte Bindemittelsystem an den jeweiligen Verwendungszweck kann dieses mindestens ein Additiv aus der Reihe Verflüssiger, redispergierbare Polymerpulver, Entschäumer, Stabilisierungsmittel, Wasserretentionsmittel, Verdicker, Verlaufsmittel, Entstaubungsmittel und Pigmente enthalten.

Die weiter oben erwähnte, zum Abbinden des zementbasierten Bindemittelsystems erforderliche Wassermenge beträgt im Allgemeinen 10 bis 50 Gew.-%, vorzugsweise etwa 25 bis 35 Gew.-% und ist dabei im Wesentlichen von dem Anteil des zementären Bindemittels abhängig. Diese Angaben verstehen sich zusätzlich zum Gesamtgewicht der Komponenten des erfindungsgemäßen Bindemittelsystems, das insoweit als 100 Gew.-% gerechnet wird.

Sobald das erfindungsgemäße zementbasierte Bindemittelsystem mit Wasser in Berührung kommt, erfolgt ein Abbinden und Aushärten des Bindemittelsystems. Man erhält so das erfindungsgemäße, hydrophile Baustofferzeugnis. Bevorzugte Baustoffrezepturen und Baustofferzeugnisse werden weiter unten erwähnt. Um als "ausgehärtetes Baustofferzeugnis" im Sinne der vorliegenden Erfindung angesehen zu werden, muss das Abbinden und Aushärten des Bindemittelsystems zumindest so weit fortgeschritten sein, dass es bei der Zugabe eines Überschusses an Wasser nicht wieder zerfällt. Zweckmäßig wurde ein ausgehärtetes Baustofferzeugnis zumindest einen Tag, vorzugsweise zumindest drei Tage, besonders bevorzugt zumindest 7 Tage und insbesondere zumindest 28 Tage aushärten lassen. Die Aushärtung erfolgt zweckmäßig bei Raumtemperatur. Erfindungsgemäß soll aber bevorzugt eine Aushärtung zwischen 0 °C und 500 °C als umfasst gelten.

Die Hydrophilie des "hydrophilierten Baustofferzeugnisses" wird über den Kontaktwinkel eines auf die Oberfläche des ausgehärteten Baustofferzeugnisses aufgesetzten Öltropfens definiert. Im Falle einer Porosität des Baustofferzeugnisses würde ein Öltropfen zumindest teilweise von der Oberfläche des Baustofferzeugnisses aufgesaugt werden, so dass eine dynamische Kontaktwinkelbestimmung erforderlich ist. Im vorliegenden Fall erfolgt die dynamische Kontaktwinkelbestimmung mittels eines proprietären, im Beispielteil ausführlich beschriebenen Messverfahrens unter Wasser.

Eine Messung des Kontaktwinkels unter Wasser ist auch auf Grund der Tatsache sinnvoll, dass sich bei den erfindungsgemäß besonders bevorzugten Systemen Öltropfen alleine durch die Zugabe von Wasser wieder von der Oberfläche des hydrophilen Baustofferzeugnisses ablösen. Im Sinne der vorliegenden Erfindung soll unter "hydrophil" ein Kontaktwinkel von ≥ 90° verstanden werden. Bei Kontaktwinkeln von ≥ 135° kann auch von "Superhydrophilie" gesprochen werden. Besonders bevorzugt sind Systeme, bei denen sich der Öltropfen nach kurzer Zeit der Wassereinwirkung wieder ablöst. In diesem Fall wird der Kontaktwinkel als 180° angesehen.

Eine höhere Hydrophilie bewirkt einen höheren Kontaktwinkel. In einer bevorzugten Ausführungsform beträgt der Kontaktwinkel eines auf die Oberfläche des erfindungsgemäßen ausgehärteten Baustofferzeugnisses aufgesetzten Öltropfens somit ≥ 90°, insbesondere ≥ 100°, vorzugsweise ≥ 135° (Superhydrophil), wobei die Kontaktwinkelbestimmung unter Wasser erfolgt.

Ein höherer Gehalt an Kaliumcarbonat kann von Vorteil sein, da hierdurch die Hydrophilie des ausgehärteten Baustofferzeugnisses erhöht wird. Vorzugsweise beträgt der Gehalt an Kaliumcarbonat des erfindungsgemäßen zementbasierten Bindemittelsystems zwischen 1,5 und 12 Gew.-%, besonders bevorzugt zwischen 2 und 10 Gew.-%, und insbesondere zwischen 3 und 6 Gew.-%, bezogen auf das wasserfreie Bindemittelsystem.

Erfindungsgemäß ist kein Titandioxid erforderlich, um die Wirkung der hohen Hydrophilie und die damit verbundene leichte Reinigbarkeit der Oberflächen ("Easy to Clean"-Effekt) zu erreichen. Allerdings kann das Bindemittelsystem optional auch titanoxidhaltige und/oder zirkonoxidhaltige Verbindungen enthalten, d.h. Verbindungen, die Titan und/oder Zirkonium sowie Sauerstoff umfassen. Der Anteil dieser Verbindungen im zementbasierten Bindemittelsystem beträgt dann vorzugsweise zwischen 0,1 und 70 Gew.-%, besonders bevorzugt zwischen 5 und 40 Gew.-% und insbesondere zwischen 10 und 30 Gew.-%, bezogen auf das wasserfreie Bindemittelsystem.

Das ständige Streben nach weitgehender Rationalisierung sowie verbesserter Produktqualität hat dazu geführt, dass zementbasierte Bindemittelsysteme, insbesondere Mörtel und Beton für die verschiedensten Einsatzbereiche heute praktisch nicht mehr auf der Baustelle selbst aus den Ausgangsstoffen zusammengemischt wird. Diese Aufgabe wird heute weitgehend von der Baustoffindustrie werksseitig übernommen und die gebrauchsfertigen Mischungen als sogenannte Werktrockenmörtel zur Verfügung gestellt. Dabei werden fertige Gemische, die auf der Baustelle ausschließlich durch Zugabe von Wasser und Durchmischen verarbeitbar gemacht werden, gemäß DIN 18557 als Werktrockenmörtel bezeichnet. Derartige Mörtelsysteme können die verschiedensten bauphysikalischen Aufgaben erfüllen. Je nach gestellter Aufgabe werden dem Bindemittel, welches bspw. Portlandzement enthalten kann, weitere Zusatzstoffe beigemengt, um den Werktrockenmörtel an den speziellen Einsatzzweck anzupassen. Hierbei kann es sich bspw. um Schwundreduzierer, Verflüssiger, Beschleuniger, Verzögerer und Korrosionsinhibitoren handeln. In einer besonders bevorzugten Ausführung der vorliegenden Erfindung handelt es sich deshalb bei dem zementbasierten Bindemittelsystem um einen Werktrockenmörtel.

Das erfindungsgemäße zementbasierte Bindemittelsystem kann für die verschiedensten Einsatzzwecke genutzt werden. Bevorzugt handelt es sich bei dem zementbasierten Bindemittelsystem oder dem ausgehärteten hydrophilen Baustofferzeugnis um Baustellenbeton, Betonfertigteile, Betonwaren, Betonwerksteine sowie Ortbeton, Spritzbeton, Transportbeton, Baukleber und Wärmedämmverbundsystem-Kleber, Betonreparatursysteme, Einkomponente- und Zweikomponenten-Dichtungsschlämme, Estrich, Spachtel- und Verlaufsmassen, Fliesenkleber, Putze, Kleb- und Dichtstoffe, Beschichtungssysteme, insbesondere für Tunnel, Abwasserkanäle, Spritzschutz und Kondensatleitungen, Trockenmörtel, Fugenmörtel, Drainagemörtel und/oder Reparaturmörtel handelt.

Weiterhin wird ein gehärtetes Baustofferzeugnis beansprucht, hergestellt aus einem zementbasierten Bindemittelsystem umfassend 1 bis 10 Gew.-%, insbesondere 2 bis 6 Gew.-% Kaliumcarbonat, 20 bis 80 Gew.-%, insbesondere 25 bis 40 Gew.-% Portlandzement und 3 bis 60 Gew.-%, insbesondere 10 bis 40 Gew.-% Mikrosilika aus der Zirkoniumgewinnung.

Es hat sich gezeigt, dass Kaliumcarbonat für die erfindungsgemäße Wirkung der hohen Hydrophilie und der leichten Reinigbarkeit verantwortlich ist. Insbesondere kann eine erfindungsgemäße Oberfläche des gehärteten Baustofferzeugnisses mit Wasser gereinigt werden, wobei auf weitere Reinigungsmittel verzichtet werden kann.

Die vorliegende Erfindung wird nun anhand der nachfolgenden Beispiele näher erläutert.

### Beispiele

Dynamische Kontaktwinkelmessung im System Öl/Wasser/Feststoff

Kontaktwinkel werden mit einer standardisierten Apparatur (Drop Shape Analysis Instrument Kruss DSA 10 der Fa. Kruss) gemessen. Dazu wird der Schatten eines (Öl-) Tropfens mit einer Videokamera aufgenommen und mittels computerisierter Bildanalyse ausgewertet.

Hierzu werden zunächst 2,0 µl Öl (z.B. Maschinenöl (bevorzugt), Sonnenblumenöl, Parafinöl, etc.) auf ein trockenes Substrat aufgesetzt, welches bei 23 °C und 50 % relativer Luftfeuchtigkeit äquilibriert wurde. Danach wird das Substrat mit dem Öltropfen auf den Boden einer optischen Küvette gelegt und die Küvette wird in das Kontaktwinkelmessgerät eingebracht. Das optische System wird auf ein scharfes Bild des Öltropfens justiert. Danach wird die Küvette mittels eines weiten Röhrchens innerhalb von 2 bis 3 Sekunden mit Wasser gefüllt. Gleichzeitig wird die Videoaufnahme begonnen und das optische System erneut scharf gestellt, da das Wasser im Strahlengang den Brennpunkt verändert. Während dieser Zeitspanne von bis zu 10 Sekunden besteht eine Unsicherheit hinsichtlich der Zeitskala der dynamischen Messungen. Das dynamische Verhalten während dieser Zeitspanne wird nicht zur Beurteilung des endgültigen Kontaktwinkels herangezogen.

Das Video wird aufgenommen, bis sich der Öltropfen ablöst oder mehr als 30 Sekunden lang keine wesentliche Änderung des Kontaktwinkels mehr beobachtet wird.

Nach Beendigung der Messung wird die Kontur des Öltropfens auf einzelnen Videobildern mittels der vom Hersteller des Messgeräts zur Verfügung gestellten Software "DSA" zur digitalen Bildanalyse ausgewertet. Für eine zuverlässige Auswertung der der Tropfenform und damit des Kontaktwinkels muss eine geeignete Anpassungsmethode in Übereinstimmung mit der Tropfenform gewählt werden. Über einen weiten Bereich von Kontaktwinkeln hat sich eine elliptische oder kreisförmige Anpassung inklusive Auswertung der Tangenten als geeignet erwiesen (vgl. Fig. 1). In Falle sehr dynamischer Systeme, in denen sich die Öltröpfchen schnell ablösen, können zwischenzeitlich auftretende Tropfenformen nicht immer im Hinblick auf klassische Tropfenformen ausgewertet werden. Dies führt zu einer gewissen Unsicherheit des durch Anpassung ermittelten Kontaktwinkels von maximal 10°, typischerweise von etwa 5°. Bei dynamischen Messkurven können diese Effekte als plötzliche kleine Sprünge des Kontaktwinkels auftauchen. Eine Ablösung kann hingegen leicht erkannt und ausgewertet werden - der resultierende Kontaktwinkel eines frei schwimmenden Öltröpfchens wird manuell mit 180° eingegeben. Alle Kontaktwinkel werden als Funktion der Zeit gespeichert und können für weitere Auswertungen verwendet werden.

Ausführungsbeispiele

| | **Vergleichsbeispiele** | | | **erfindungsgemäße Beispiele** | | |
|---|---|---|---|---|---|---|
| | **M1** | **M2** | **M3** | **M4** | **M5** | **M6** |
| **Rohstoffe** | [g] | | | | | |
| Portlandzement CEM I 42,5 R | 300 | 250 | 250 | 300 | 250 | 250 |
| Mikrosilika, zirkonhaltig | | 50 | | | 50 | |
| Mikrosilika, zirkonfrei | | | 50 | | | 50 |
| Kaliumcarbonat | | | | 10 | 10 | 10 |
| Quarzsand 0 - 0,4 mm | 700 | 700 | 700 | 690 | 690 | 690 |
| | | | | | | |
| Anmachwasser | 165 | 165 | 165 | 165 | 165 | 165 |

Mit den o.g. Rohstoffen werden Mörtel hergestellt, wobei nach DIN EN 196 vorgegangen wird. Wie in selbiger Norm beschrieben werden Probekörperprismen hergestellt, die nach einer Aushärtezeit von 28 Tagen für weitere 2 Tage an Normklima äqulibriert werden. Am 30. Tag nach Probekörperherstellung wird nach oben beschriebener Methode der Kontaktwinkel eines Öltropfens auf der Probekörperoberfläche bestimmt, wobei sich folgende Ergebnisse messen lassen:

| | gemessener Randwinkel |
|---|---|
| | [°] |
| M1 | 20 |
| M2 | 50 |
| M3 | 40 |
| M4 | 170 |
| M5 | 180 |
| M6 | 140 |

Die Versuche zeigen, dass die erfindungsgemäßen Proben M4 - M6, welche Kaliumcarbonat enthalten, an der Oberfläche hydrophile Eigenschaften aufweisen und Öl-und fetthaltige Substanzen abstoßen. Durch die Zugabe von zirkonhaltigem Mikrosilika wird der Effekt verstärkt.

## Patentansprüche

1. Verwendung von ≥ 1 Gew.-% Kaliumcarbonat, bezogen auf die Trockenmasse eines zementbasierten Bindemittelsystems, zur Hydrophilierung der Oberfläche des daraus hergestellten, gehärteten Baustofferzeugnisses.

2. Verwendung nach Anspruch 1, **dadurch gekennzeichnet, dass** das Bindemittelsystem Calciumsilikat-Zement enthält.

3. Verwendung nach Anspruch 1 oder 2, **dadurch gekennzeichnet, dass** der Anteil an Zement ≥ 20 Gew.-%, bezogen auf die Trockenmasse des zementbasierten Bindemittelsystems, beträgt.

4. Verwendung nach einem der Ansprüche 1 bis 3, **dadurch gekennzeichnet, dass** das zementbasierte Bindemittelsystem einen Anteil von 3 bis 60 Gew.-% Mikrosilika enthält.

5. Verwendung nach Anspruch 4, **dadurch gekennzeichnet, dass** es sich um Mikrosilika aus der Zirkoniumgewinnung handelt.

6. Verwendung nach einem der Ansprüche 1 bis 5, **dadurch gekennzeichnet, dass** es sich bei dem zementbasierten Bindemittelsystem oder dem ausgehärteten hydrophilen Baustofferzeugnis um Baustellenbeton, Betonfertigteile, Betonwaren, Betonwerksteine sowie Ortbeton, Spritzbeton, Transportbeton, Baukleber und Wärmedämmverbundsystem-Kleber, Betonreparatursysteme, Einkomponente-und Zweikomponenten-Dichtungsschlämme, Estrich, Spachtel- und Verlaufsmassen, Fliesenkleber, Putze, Kleb- und Dichtstoffe, Beschichtungssysteme, insbesondere für Tunnel, Abwasserkanäle, Spritzschutz und Kondensatleitungen, Trockenmörtel, Fugenmörtel, Drainagemörtel und/oder Reparaturmörtel handelt.

7. Verwendung nach einem der Ansprüche 1 bis 6, **dadurch gekennzeichnet, dass** das zementbasierte Bindemittelsystem mindestens ein Additiv aus der Reihe Verflüssiger, redispergierbare Polymerpulver, Entschäumer, Stabilisierungsmittel, Wasserretentionsmittel, Verdicker, Verlaufsmittel, Entstaubungsmittel und Pigmente enthält.

8. Verwendung nach einem der Ansprüche 1 bis 7, **dadurch gekennzeichnet, dass** das zementbasierte Bindemittelsystem als Füllstoff mindestens eine Verbindung aus der Reihe Quarzsand, Quarzmehl, Kalkstein, Schwerspat, Calcit, Dolomit, Talkum, Kaolin, Glimmer und Kreide enthält.

9. Verwendung nach einem der Ansprüche 1 bis 8, **dadurch gekennzeichnet, dass** das zementbasierte Bindemittelsystem als Leichtfüllstoff mindestens eine Verbindung aus der Reihe Perlit, Mineralschaum, Schaumperlen, Bims, Blähglas, Hohlglaskugeln und Calciumsilikat-Hydrat enthält.

10. Verwendung nach einem der Ansprüche 1 bis 9, **dadurch gekennzeichnet, dass** es sich bei dem zementbasierten Bindemittelsystem um einen Werktrockenmörtel handelt.

11. Verwendung nach einem der Ansprüche 1 bis 10, **dadurch gekennzeichnet, dass** der Kontaktwinkel eines auf die Oberfläche des ausgehärteten Baustofferzeugnisses aufgesetzten Öltropfens ≥ 90° beträgt, wobei die Kontaktwinkelbestimmung unter Wasser erfolgt.

12. Verwendung nach einem der Ansprüche 1 bis 11, **dadurch gekennzeichnet, dass** der Gehalt an Kaliumcarbonat, bezogen auf die Trockenmasse des zementbasierten Bindemittelsystems, zwischen 1,5 und 12 Gew.-% beträgt.

13. Gehärtetes Baustofferzeugnis, hergestellt aus einem zementbasierten Bindemittelsystem umfassend
1 bis 10 Gew.-% Kaliumcarbonat,
20 bis 80 Gew.-% Portlandzement und
3 bis 60 Gew.-% Mikrosilika aus der Zirkoniumgewinnung.

## Claims

1. Use of ≥ 1% by weight of potassium carbonate, based on the dry mass of a cement-based binder system, for hydrophilicizing the surface of a cured building product produced therefrom.

2. Use according to Claim 1, **characterized in that** the binder system contains calcium silicate cement.

3. Use according to Claim 1 or 2, **characterized in that** the proportion of cement is ≥ 20% by weight, based on the dry mass of the cement-based binder system.

4. Use according to any of Claims 1 to 3, **characterized in that** the cement-based binder system contains a proportion of from 3 to 60% by weight of microsilica.

5. Use according to Claim 4, **characterized in that** the microsilica comes from zirconium production.

6. Use according to any of Claims 1 to 5, **characterized in that** the cement-based binder system or the cured hydrophilic building product is on-site concrete, finished concrete parts, concrete goods, concrete blocks and in-situ concrete, spray concrete, ready-mixed (transported) concrete, building adhesives and composite thermal insulation system adhesives, concrete repair systems, one-component and two-component sealing slurries, screed, knifing compositions and self-levelling compositions, tile adhesives, renders, adhesives and sealants, coating systems, in particular for tunnels, wastewater channels, spray protection and condensate conduits, dry mortars, joint grouts, drainage mortars and/or repair mortars.

7. Use according to any of Claims 1 to 6, **characterized in that** the cement-based binder system contains at least one additive selected from the group consisting of plasticizers, redispersible polymer powders, antifoams, stabilizers, water retention agents, thickeners, levellers, antidust agents and pigments.

8. Use according to any of Claims 1 to 7, **characterized in that** the cement-based binder system contains at least one compound selected from the group consisting of silica sand, ground quartz, limestone, barite, calcite, dolomite, talc, kaolin, mica and chalk as filler.

9. Use according to any of Claims 1 to 8, **characterized in that** the cement-based binder system contains at least one compound selected from the group consisting of pearlite, mineral foam, foam beads, pumice, foamed glass, hollow glass spheres and calcium silicate hydrate as lightweight filler.

10. Use according to any of Claims 1 to 9, **characterized in that** the cement-based binder system is a factory dry mortar.

11. Use according to any of Claims 1 to 10, **characterized in that** the contact angle of an oil drop placed on the surface of the cured building product is ≥ 90°, with the contact angle measurement being carried out under water.

12. Use according to any of Claims 1 to 11, **characterized in that** the content of potassium carbonate, based on the dry mass of the cement-based binder system, is in the range from 1.5 to 12% by weight.

13. Cured building product which is produced from a cement-based binder system comprising from 1 to 10% by weight of potassium carbonate, from 20 to 80% by weight of portland cement and from 3 to 60% by weight of microsilica from zirconium production.

## Revendications

1. Utilisation de ≥ 1% en poids de carbonate de potassium, par rapport à la masse sèche d'un système de liant à base de ciment, pour l'hydrophilisation de la surface du produit de construction durci préparé à partir de celui-ci.

2. Utilisation selon la revendication 1, **caractérisée en ce que** le système de liant contient du silicate de calcium-ciment.

3. Utilisation selon la revendication 1 ou 2, **caractérisée en ce que** la proportion de ciment est ≥ 20% en poids, par rapport à la masse sèche du système de liant à base de ciment.

4. Utilisation selon l'une quelconque des revendications 1 à 3, **caractérisée en ce que** le système de liant à base de ciment contient une proportion de 3 à 60% en poids de microsilice.

5. Utilisation selon la revendication 4, **caractérisée en ce qu'**il s'agit de microsilice provenant de la production de zirconium.

6. Utilisation selon l'une quelconque des revendications 1 à 5, **caractérisée en ce qu'**il s'agit, pour le système de liant à base de ciment ou pour le produit hydrophile durci de construction, de béton produit sur le chantier, de pièces finies en béton, de produits en béton, de pierres de construction en béton, de béton coulé sur place, de béton pulvérisé, de béton transporté, de colle de construction et de colle pour système composite d'isolation thermique, de systèmes de réparation de béton, de suspensions d'étanchéité à un et à deux composants, de chapes, de mastics et de masses d'étalement, de colles pour carreaux, d'enduits, de substances adhésives et d'étanchéité, de systèmes de revêtement, en particulier pour des tunnels, des conduites d'eaux usées, la protection par pulvérisation et les conduites de condensat, de mortier sec, de mortier de jointoiement, de mortier de drainage et/ou de mortier de réparation.

7. Utilisation selon l'une quelconque des revendications 1 à 6, **caractérisée en ce que** le système de liant à base de ciment contient au moins un additif de la série fluidifiant, poudre polymère redispersible, antimousse, stabilisant, agent de rétention d'eau, épaississant, agent d'étalement, agent antipoussière et pigments.

8. Utilisation selon l'une quelconque des revendications 1 à 7, **caractérisée en ce que** le système de liant à base de ciment contient, comme charge, au moins un composé de la série sable de quartz, farine de quartz, pierre calcaire, sulfate de baryum lourd, calcite, dolomite, talc, kaolin, mica et craie.

9. Utilisation selon l'une quelconque des revendications 1 à 8, **caractérisée en ce que** le système de liant à base de ciment contient, comme charge légère, au moins un composé de la série perlite, mousse minérale, perles de mousse, pierre ponce, verre soufflé, billes de verre creuses et silicate de calcium hydraté.

10. Utilisation selon l'une quelconque des revendications 1 à 9, **caractérisée en ce qu'**il s'agit, pour le système de liant à base de ciment, d'un mortier sec prêt à l'emploi.

11. Utilisation selon l'une quelconque des revendications 1 à 10, **caractérisée en ce que** l'angle de contact d'une goutte d'huile placée sur la surface du produit de construction durci est ≥ 90°, la détermination de l'angle de contact étant réalisée sous eau.

12. Utilisation selon l'une quelconque des revendications 1 à 11, **caractérisée en ce que** la teneur en carbonate de potassium, par rapport à la masse sèche du système de liant à base de ciment, est située entre 1,5 et 12% en poids.

13. Produits de construction durcis, préparés à partir d'un système de liant à base de ciment comprenant 1 à 10% en poids de carbonate de potassium, 20 à 80% en poids de ciment Portland et 3 à 60% en poids de microsilice provenant de la production de zirconium.
